Europäisches Patentamt

European Patent Office

Office européen des brevets

(19)

(11) **EP 0 996 659 B1**

(12) **FASCICULE DE BREVET EUROPEEN**

(45) Date de publication et mention
de la délivrance du brevet:
**20.08.2003 Bulletin 2003/34**

(51) Int Cl.⁷: **C08G 69/00**, C08G 69/26,
C08G 69/32, C08G 83/00

(21) Numéro de dépôt: 98937543.1

(22) Date de dépôt: **24.06.1998**

(86) Numéro de dépôt international:
**PCT/EP98/03858**

(87) Numéro de publication internationale:
**WO 99/003909 (28.01.1999 Gazette 1999/04)**

(54) **COPOLYAMIDE THERMOPLASTIQUE, COMPOSITION A BASE DE CELUI-CI**

THERMOPLASTISCHES COPOLYAMID, FORMMASSE AUS DIESEM

THERMOPLASTIC COPOLYAMIDE, COMPOSITION BASED THEREON

(84) Etats contractants désignés:
**AT BE CH DE DK ES FI FR GB GR IE IT LI LU NL
PT SE**

(30) Priorité: **17.07.1997 FR 9709313**

(43) Date de publication de la demande:
**03.05.2000 Bulletin 2000/18**

(73) Titulaire: **Rhodia Engineering Plastics Srl
20020 Ceriano Laghetto (MI) (IT)**

(72) Inventeurs:
• **DI SILVESTRO, Giuseppe
Lentate Sul Seveso (IT)**
• **GUAITA, Cesare
I-21049 Tradate (IT)**

• **SPERONI, Franco
I-20020 Ceriano Laghetto (IT)**
• **YUAN, Cuiming
I-20126 Milano (IT)**
• **ZHANG, Haichun
I-21047 Saronno (IT)**

(74) Mandataire: **Esson, Jean-Pierre
Rhodia Services,
Direction de la Propriété Industrielle,
Centre de Recherche Lyonnais,
BP 62
69192 Saint-Fons Cédex (FR)**

(56) Documents cités:
**WO-A-92/08749      WO-A-93/09162
WO-A-95/06081**

EP 0 996 659 B1

**Description**

La présente invention concerne un copolyamide thermoplastique et une composition comprenant comme matrice ce copolyamide thermoplastique, ainsi qu'un procédé de fabrication d'un tel copolyamide thermoplastique.

Dans le domaine des pièces réalisées en matière plastique, de nombreuses pièces sont obtenues par moulage d'une composition comprenant comme matrice un polyamide. Les polyamides généralement utilisés sont des polyamides linéaires aliphatiques, aromatiques ou semi-aromatiques.

Les nouveaux procédés de mise en forme de ces compositions, comme par exemple, l'extrusion-soufflage requièrent des compositions présentant une viscosité en milieu fondu élevée pour que la pièce extrudée avant le soufflage ne se déforme pas ou faiblement sous l'effet de son propre poids. Toutefois, les propriétés mécaniques, élastiques et de résistance aux chocs des pièces ne doivent pas être affectées ou faiblement. Certaines solutions ont été proposées telles que l'utilisation de polyamides linéaires de haute viscosité obtenus par post-condensation en milieu solide, ou par addition d'agents d'extension de chaînes. Toutefois, ces solutions sont souvent difficiles à mettre en oeuvre ou altèrent certaines propriétés des pièces obtenues.

L'invention a pour but un nouveau polyamide présentant une viscosité élevée en milieu fondu, qui peut être obtenu par un procédé de fabrication simple et avec des caractéristiques mécaniques satisfaisantes, sans utiliser des procédés pour l'augmentation de cette viscosité, soit coûteux et difficilement contrôlables, soit pénalisants pour les propriétés de la pièce fabriquée.

A cet effet, l'invention propose un nouveau copolyamide présentant une structure du type arbre statistique.

Ce copolyamide est le résultat de la réaction entre au moins un monomère multifonctionnel répondant à la formule générale I suivante :

$$(AR_1)\text{-}R\text{-}(R_2B)_n \tag{1}$$

dans laquelle :

- n est un nombre entier supérieur ou égal à 2, de préférence compris entre 2 et 10 (bornes incluses)
- $R_1$, $R_2$ peuvent être identiques ou différents et représentent une liaison covalente, un radical hydrocarboné aliphatique, arylaliphatique. aromatique ou alkylaromatique
- R est un radical aliphatique linéaire ou ramifié, un radical cycloaliphatique substitué ou non, un radical aromatique substitué ou non pouvant comprendre plusieurs noyaux aromatiques et/ou des hétéroatomes, une chaine polymérique pouvant contenir des hétéroatomes
- A représente la fonction amine ou sel et amine, ou la fonction acide, ester, halogénure d'acide ou amide
- B représente la fonction amine ou sel d'amine quand A représente une fonction acide, ester, halogénure d'acide ou amide, et une fonction acide, ester, halogénure d'acide ou amide quand A représente une fonction amine ou sel d'amine,

et, au moins un des monomères bifonctionnels de formules II à IV suivantes avec éventuellement au moins un des monomères monofonctionnels de formule V ou VI suivantes, ou avec un prépolymère obtenu à partir d'au moins un monomère bifonctionnel de formules II à IV suivantes et, éventuellement au moins un monomère monofonctionnel de formule V ou VI suivante,

- les monomères bifonctionnels répondant aux formules générales suivantes :

$$A_1\text{-}R_3\text{-}A_1 \tag{II}$$

$$B_1\text{-}R_4\text{-}B_1 \tag{III}$$

et/ou

$$A_1\text{-}R_5\text{-}B_1 \text{ ou les lactames correspondants} \tag{Iv}$$

- les monomères monofonctionnels répondant aux formules générales suivantes :

$$R_6\text{-}B_1 \qquad\qquad\qquad\qquad (V),$$

et/ou

$$R_7\text{-}A_1 \qquad\qquad\qquad\qquad (VI)$$

dans lesquelles :

- $A_1$, $B_1$ représentent respectivement une fonction acide, ester ou chlorure d'acide, et une fonction amine, ou un sel d'amine.
- $R_3$, $R_4$, $R_5$, $R_6$, $R_7$ représentent des radicaux hydrocarbonés alkyles linéaires ou ramifiés, aromatiques substitués ou non alkylaryles, arylalkyles ou cycloaliphatiques pouvant comprendre des insaturations

Selon une caractéristique préférentielle de l'invention, le radical R est un radical aromatique, $R_1$, $R_2$ représentant chacun une liaison covalente.

Par ailleurs, les fonctions B et A de la formule I sont respectivement une fonction acide et une fonction amine, le nombre **n** de fonction acide étant avantageusement égal à 2.

Ainsi, les monomères polyfonctionnels convenables et préférés de l'invention sont, notamment, les monomères stables thermiquement à une température supérieure à 150°C. A titre d'exemple, on peut citer les monomères polyfonctionnels conformes à la formule I dans laquelle R représente un radical aromatique tel que l'acide aminophtalique, ou un radical aliphatique linéaire tel que le diacide 3-aminopimélique, ou l'acide 6-amino undécandioïque. On peut également citer les $\alpha$-aminoacides tels que l'acide aspartique, l'acide glutamique.

Les monomères difonctionnels de formules II à IV sont les monomères utilisés pour la fabrication de polyamide thermoplastique linéaires. Ainsi, on peut citer les composés $\omega$-aminoalcanoïque comportant une chaîne hydrocarbonée ayant de 4 à 12 atomes de carbone, ou les lactames dérivés de ces acides aminoacides comme l'$\varepsilon$-caprolactame, les diacides carboxyliques aliphatiques saturés ayant de 6 à 12 atomes de carbone tels que, par exemple l'acide adipique, acide azélaïque, acide sébacique, acide dodécanoïque, les diamines biprimaires de préférence aliphatiques saturées linéaires ou ramifiées ayant de 6 à 12 atomes de carbone telles que, par exemple, l'hexaméthylène diamine, la triméthylhexaméthylène diamine, la tétraméthylène diamine, la m-xylène diamine.

Bien entendu, des mélanges de ces monomères peuvent être utilisés.

Les monomères bifonctionnels préférés de l'invention sont l'$\varepsilon$-caprolactame, ou l'hexaméthylène diamine et l'acide adipique ou un mélange de ceux-ci.

Selon une autre caractéristique de l'invention, le rapport molaire entre les monomères multifonctionnels de formule I et la somme des monomères bifonctionnels de formules II à IV et monomères monofonctionnels de formules V et VI est compris entre 0,01 % et 5 %, de préférence entre 0,05 % et 1 % pour obtenir un copolyamide présentant un niveau de propriétés mécaniques équivalent à celui du polyamide linéaire correspondant.

Le copolyamide de l'invention présente un indice de fluidité en milieu fondu (M.F.I.) inférieur à 5 g/10 min (mesuré à 275°C sous une charge de 2160 g), et avantageusement un indice de distribution D des masses moléculaires supérieur à 2.

L'indice de distribution D des masses moléculaires est une fonction du degré de polymérisation DPn et du facteur de fonctionnalité F du polymère.

Le facteur de fonctionnalité F est calculé par la relation :

$$F = 1 + \frac{N_2}{N_1 + N_2}$$

dans laquelle

- $N_2$ représente le nombre de moles du composé polyfonctionnel,
- $N_1$ représente le nombre de moles de caprolactame ou monomère bifonctionnel,

DPn est calculé par la relation suivante :

$$DPn = \frac{A_2/B_2 - 1}{F - 1}$$

dans laquelle :

- $B_2$ représente la concentration en nombre de fonctions $NH_2$ dans le polymère fini, et
- $A_2$ la concentration en nombre de fonction COOH dans le même polymère fini.

Le coefficient de distribution D est donné par la formule suivante :

$$D = \frac{A_2/B_2 + 1}{F}$$

Il est également possible de déterminer le nombre de branches du polymère hyperbranché selon la formule suivante :

$$R = B_2/A_2 - 1, \text{ ou } R = DPn \, (F-1)$$

Ainsi, on peut tracer des courbes permettant de déterminer le nombre de branches R et, le coefficient de distribution D en fonction du degré de polymérisation DPn pour différentes valeurs du facteur de fonctionnalité F.

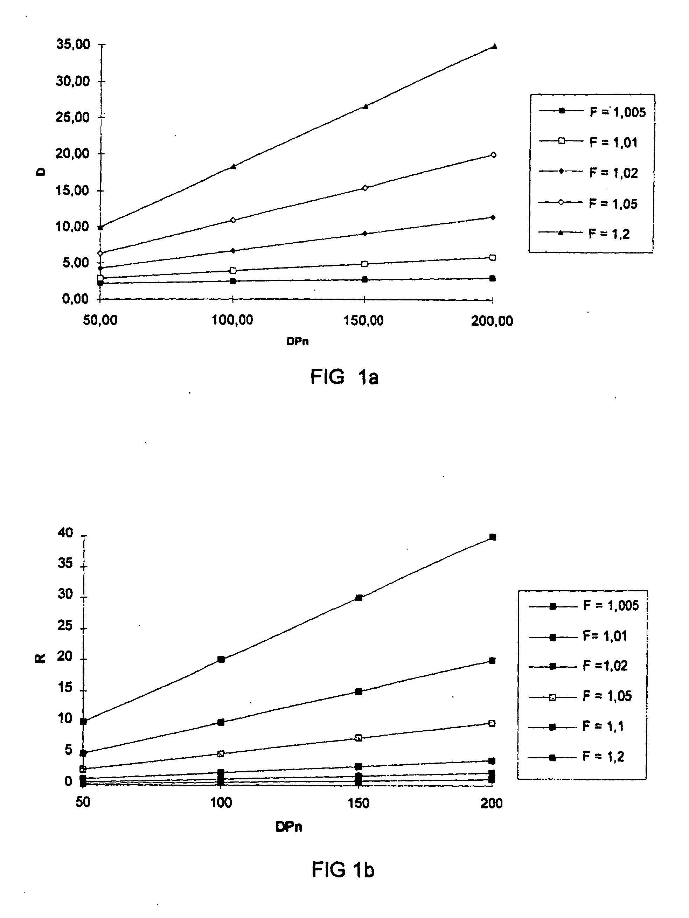

Des exemples de ces courbes sont représentés dans les figures 1a et 1b annexées.

Les copolymères de l'invention présentent également une résistance aux chocs améliorée par rapport aux polyamides linéaires obtenus par les monomères bifonctionnels correspondants. Ainsi, dans le cas d'un copolymère obtenu par utilisation de l'ε-caprolactame comme monomère bifonctionnel, la résistance aux chocs du copolyamide est supérieure à 60 J/m, celle du polyamide linéaire correspondant c'est-à-dire le polycaprolactame, est inférieure à 50 J/m.

De tels copolyamides peuvent être utilisés dans de nombreuses applications telles que la fabrication de pièces moulées ou injectées.

Ils sont notamment convenables pour la fabrication de pièces par les techniques d'extrusion-soufflage. En effet, la faible fluidité en milieu fondu du copolyamide permet de limiter les déformations des paraisons lors de leur extrusion, avant l'étape de soufflage.

On peut également fabriquer avec les copolyamides de l'invention des articles par les procédés d'injection. Ces articles présentent des propriétés mécaniques nettement plus élevées que celles des articles obtenues par injection d'une composition à base de polyamide linéaire de même fluidité en milieu fondu.

Le copolyamide de l'invention peut être également utilisé comme matrice polymérique pour la réalisation de compositions comprenant différents additifs ou charges de renfort ou de remplissage.

L'invention a également pour objet une composition notamment destinée à être moulée pour former des pièces ou articles. Cette composition comprend comme matrice polymérique au moins un polyamide conforme à l'invention et éventuellement d'autres additifs tels que des aides au moulage ou démoulage, stabilisants chaleur, stabilisants lumière, antioxydants, ignifugeants, pigments, colorants et lubrifiants.

La composition peut également comprendre des agents améliorant la résistance aux chocs et/ou des charges de remplissage ou de renfort.

Les compositions de l'invention peuvent également comprendre comme matrice polymérique, en plus du polyamide tel que décrit ci-dessus, d'autres matières thermoplastiques telles que des polyamides linéaires aliphatiques ou des polyamides aromatiques ou semi-aromatiques, par exemple.

Selon une caractéristique de l'invention, les compositions de l'invention sont obtenues par mélange généralement dans une extrudeuse mono ou bivis, d'un polyamide conforme à l'invention avec les différents additifs, ce mélange étant réalisé généralement à l'état fondu du polyamide, puis extrusion du mélange sous forme de joncs qui sont ensuite découpés en granulés. Les pièces moulées sont ensuite réalisées par fusion des granulés produits ci-dessus et alimentation de la composition à l'état fondu dans les dispositifs de moulage, d'injection ou d'extrusion appropriés.

L'invention a également pour objet un procédé de fabrication d'un copolyamide conforme à l'invention.

Dans un premier mode de réalisation de ce procédé de fabrication, un mélange de monomères est réalisé avec des proportions déterminées de chaque composant. Ledit mélange est polymérisé dans des conditions et selon un mode opératoire équivalents à ceux utilisés pour la fabrication du polyamide linéaire correspondant aux monomères bifonctionnels mis en oeuvre. Ainsi, quand de l'ε-caprolactame est mis en oeuvre, de l'eau est ajoutée au mélange de monomères pour amorcer l'ouverture hydrolytique du caprolactame.

Selon un second mode de réalisation de l'invention, un prépolymère de polyamide linéaire est fabriqué par polycondensation des monomères bifonctionnels pour obtenir un prépolymère de poids moléculaire en nombre $\overline{Mn}$ de l'ordre de 2000 à 3000 environ.

Le monomère polyfonctionnel est ajouté au prépolymère linéaire et la polymérisation est poursuivie soit en milieu fondu soit en phase solide. Ce mode de réalisation permet notamment d'obtenir des copolyamides hyperbranchés en utilisant des monomères polyfonctionnels présentant une stabilité thermique à des températures relativement faibles par exemple inférieur à 200°C, car la température de postcondensation en phase solide est réalisée à des températures plus basses que celles de la polymérisation en milieu fondu.

L'addition du monomère polyfonctionnel peut être réalisée en extrudeuse ou dans un réacteur, la postcondensation en phase solide étant mise eu oeuvre selon les conditions classiques et habituelles utilisées pour celle des polyamides linéaires.

Selon une autre variante de ce mode de réalisation du procédé de fabrication d'un copolyamide conforme à l'invention, le monomère polyfonctionnel est ajouté avec un catalyseur permettant ainsi de réaliser la réaction directement dans l'extrudeuse. Les catalyseurs convenables sont les catalyseurs classiquement utilisés pour les réactions d'amidification ou de polycondensation des fonctions amides tels que les composés phosphorés par exemple.

D'autres détails et avantages de l'invention apparaîtront plus clairement au vu des exemples donnés ci-dessous uniquement à titre d'illustration et au vu des figures annexées dans lesquelles :

- les figures la et 1b représentent des graphiques comprenant un ensemble de courbes pour des valeurs du facteur de fonctionnalité F différentes représentant respectivement la variation du coefficient de distribution D et du nombre de branches R en fonction du Degré de polymérisation DPn, et

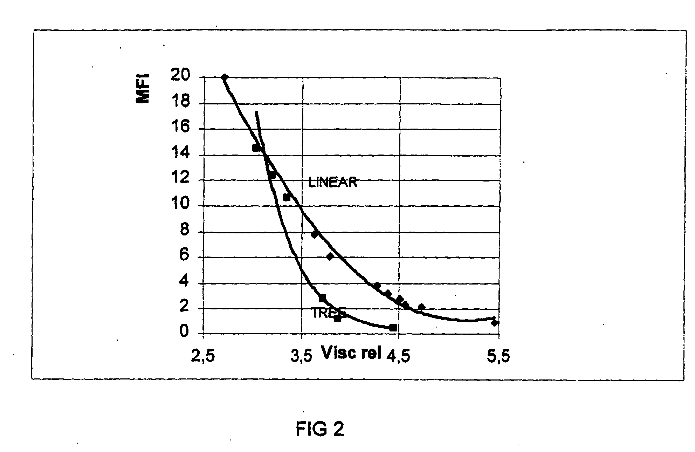

- la figure 2 représente la variation de l'indice de fluidité en milieu fondu en fonction de la viscosité relative d'un polyamide linéaire et d'un copolyamide conforme à l'invention et correspondant aux exemples B et 4

Exemples 1 à 3

La synthèse de copolyamide conforme à l'invention a été réalisée en ajoutant dans la masse réactionnelle d'ε-caprolactame d'un procédé classique de préparation de polyamide 6, des quantités déterminées d'un monomère polyfonctionnel conforme à la formule I, à savoir l'acide 5-amino isophtalique.

La réaction de polymérisation a été réalisée pendant 12 heures à 270°C sous atmosphère inerte (azote).

Pour initier la polymérisation par la coupure hydrolytique du caprolactame, une faible quantité d'eau est ajoutée au milieu réactionnel.

Pour chaque polymère obtenu, on mesure la viscosité relative η, la concentration en nombre de terminaisons amine et acide ainsi que le facteur de distribution des masses moléculaires D et l'indice de fluidité en milieu fondu (MFI).

Cet indice est déterminé selon la norme ASTM D1238 sous une charge de 2160 g et à une température de 275°C.

La viscosité relative η est déterminée avec une solution à 1 % poids de polymère dans de l'acide sulfurique à 96 %.

L'indice de distribution D est une fonction du degré de polymérisation DPn et du facteur de fonctionnalité F du polymère.

Les nombres de terminaisons amine et acide dans le copolyamide final sont déterminés par analyse potentiométrique et sont exprimés en meq/kg de polymère

Tableau I

| Ex. | AIT % molaire | $H_2O$ % poids | MFI 9/10 min | D | A meq/kg $NH2$ | B meq/kg COOH | η |
|---|---|---|---|---|---|---|---|
| A | -- | 0,042 | 6,6 | 2 | 30,9 | 31,9 | 3,89 |
| 1 | 0,25 | 0,10 | 0,38 | 3 | 27 | 53,9 | 4,55 |
| 2 | 0,50 | 0,1 | 0,53 | 3,8 | 21 | 59,3 | 4,45 |
| 3 | 1,00 | 0,07 | 0,83 | 6,66 | 16,5 | 94 | 4,36 |
| AIT : acide amino-5 isophtalique | | | | | | | |

Exemples 4 à 8

Des essais réalisés selon le mode opératoire des exemples 1 à 3 avec 0,5 % en mole d'acide 5-amino isophtalique ont été effectués avec des durées de polymérisation différentes. Les résultats sont indiqués dans le tableau II ci-dessous.

Tableau II

| Ex | Durée de polymérisation (h) | MFI g/10 min | $A_2$ ($NH_2$) (meq/Kg) | $B_2$ (COOH) (meq/Kg) | $\eta$ |
|---|---|---|---|---|---|
| B | 12 | 14,1 | 43,3 | 36,1 | 3,56 |
| 4 | 4 | 14,6 | 35,1 | 78,2 | 3,02 |
| 5 | 6 | 12,5 | 32,7 | 71,7 | 3,18 |
| 6 | 8 | 10,7 | 30,3 | 74 | 3,33 |
| 7 | 10 | 2,9 | 29,7 | 62,4 | 3,72 |
| 8 | 12 | 1,3 | 26,2 | 60,9 | 3,87 |

Ces résultats démontrent que pour obtenir un polyamide présentant un indice de fluidité en milieu fondu équivalent à celui d'un polyamide linéaire, la durée de polymérisation peut être divisée par 3. Par ailleurs, le polyamide de l'invention peut présenter un indice de fluidité en milieu fondu dix à vingt fois inférieur à celui d'un polyamide linéaire. La variation de cet indice de fluidité en milieu fondu en fonction de la viscosité est illustrée par la figure 2 annexée.

Les propriétés mécaniques du copolyamide obtenu à l'exemple 4 ont été déterminées sur des éprouvettes de largeur 12,57 mm, épaisseur 3,16 mm et longueur 50 ou 80 mm. le tableau III ci-dessous rassemble ces résultats en comparaison avec un polyamide linéaire PA 6.

Tableau III

| Propriétés | Polyamide ramifié de l'exemple 4 | Polyamide linéaire PA6 |
|---|---|---|
| Viscosité relative | 3,33 | 3,4 |
| Nombre de fonctions terminales $NH_2$ (meq/Kg) | 30 | 38 |
| Nombre de fonctions terminales COOH (meq/Kg) | 74 | 37 |
| Résistance aux chocs IZOD (Norme ASTM D256) (J/m) | 70,6 | 40-50 |
| Module de flexion (Norme ASTM D638) (N/mm$^2$) | 2650 | 2750 |
| Résistance à la traction (N/mm$^2$) | 75,2 | 70 |
| Allongement % | 180 | 200 |

## Revendications

1. Copolyamide thermoplastique **caractérisé en ce qu'**il résulte de la réaction entre au moins un monomère multifonctionnel répondant à la formule générale I suivante à l'exception des aminoacides naturels :

$$(AR_1)\text{-}R\text{-}(R_2B)_n \qquad\qquad (I)$$

dans laquelle :

- n est un nombre entier supérieur ou égal à 2, de préférence compris entre 2 et 10 (bornes incluses)
- $R_1$, $R_2$ peuvent être identiques ou différents et représentent une liaison covalente, un radical hydrocarboné aliphatique, arylaliphatique, aromatique ou alkylaromatique

- R est un radical aliphatique linéaire ou ramifié, un radical cycloaliphatique substitué ou non, un radical aromatique substitué ou non pouvant comprendre plusieurs noyaux aromatiques **et/ou des hétéroatomes, une chaîne polymérique pouvant contenir des hétéroatomes**
- A représente la fonction amine ou sel et amine, ou la fonction acide, ester, alogénure d'acide ou amide
- B représente la fonction amine ou sel d'amine quand A représente une fonction acide, ester, halogénure d'acide ou amide, et une fonction acide, ester, halogénure d'acide ou amide quand A représente une fonction amine ou sel d'amine, et, au moins un des monomères bifonctionnels de formules II à IV suivantes avec eventuellement des monomères monofonctionnels de formule V ou VI suivantes, ou avec un prépolymère obtenu à partir d'au moins un monomère bifonctionnel de formules II à IV suivantes et, éventuellement au moins un monomère monofonctionnel de formules V ou VI suivantes,

- les monomères bifonctionnels répondant aux formules générales suivantes:

$$A_1\text{-}R_3\text{-}A_1 \qquad\qquad\qquad (II)$$

$$B_1\text{-}R_4\text{-}B_1 \qquad\qquad\qquad (III)$$

et/ou

$$A_1\text{-}R_5\text{-}B_1 \text{ ou les lactames correspondants} \qquad\qquad (IV)$$

- les monomères monofonctionnels répondant aux formules générales suivantes :

$$R_6\text{-}B_1 \qquad\qquad\qquad (V),$$

et/ou

$$R_7\text{-}A_1 \qquad\qquad\qquad (VI)$$

dans lesquelles :

- $A_1$, $B_1$ représentent respectivement une fonction acide, ester ou chlorure d'acide, et une fonction amine, ou un sel d'amine,
- $R_3$, $R_4$, $R_5$, $R_6$, $R_7$ représentent des radicaux hydrocarbonés alkyles linéaires ou ramifiés, aromatiques substitués ou non alkylaryles, arylalkyles ou cycloaliphatiques pouvant comprendre des insaturations,
- Le rapport molaire entre les monomères multifonctionnels de formule I et la somme des monomères difonctionnels de formule II, III, IV et monofonctionnels de formules V et VI est compris entre 0,01 % et 5 %, de préférence entre 0,05 et 1 %.

2. Copolyamide selon la revendication 1, **caractérisé en ce que** le radical R est un radical aromatique.

3. Copolyamide selon l'une des revendications 1 à 2, **caractérisé en ce que** le monomère de formule I est un composé dans lequel A représente la fonction amine, B la fonction acide, n est égal à 2 et R représente un radical aromatique, $R_1$ et $R_2$ représentent une liaison covalente.

4. Copolyamide selon l'une des revendications 1 à 3, **caractérisé en ce que** le monomère de formule I est l'acide 5-amino-isophtalique.

5. Copolyamide selon l'une des revendications 1 à 3, **caractérisé en ce que** le monomère de formule I est l'acide 6-amino-undécanedioïque.

6. Copolyamide selon l'une des revendications précédentes, **caractérisé en ce qu'**il présente un indice de fluidité (MFI) en milieu fondu inférieur à 5 g/10 min (mesuré à 275°C sous une charge de 2160 g).

7.  Copolyamide selon l'une des revendications précédentes, **caractérisé en ce qu'**il présente un indice de distribution D des masses moléculaires supérieur à 2.

8.  Procédé de fabrication d'un copolyamide selon l'une des revendications précédentes, **caractérisé en ce qu'**il consiste à ajouter dans la masse réactionnelle contenant des monomères bifonctionnels de formules II à IV et, éventuellement des monomères monofonctionnels de formules V ou VI, conduisant à un polyamide linéaire, une quantité déterminée d'un monomère plurifonctionnel de formule I, puis à réaliser la polycondensation dans les conditions de température et pression utilisées pour la polymérisation dudit polyamide linéaire.

9.  Procédé de fabrication d'un copolyamide selon l'une des revendications 1 à 7, **caractérisé en ce qu'**il consiste à synthétiser un prépolymère d'un polyamide linéaire à partir de monomère(s) de formules II à IV et, éventuellement des monomères monofonctionnels de formule V ou VI, à ajouter à cedit prépolymère en milieu solide ou fondu une quantité déterminée de monomère polyfonctionnel, puis à faire réagir ledit monomère polyfonctionnel et ledit prépolymère soit en phase solide soit en phase fondue.

10. Procédé selon la revendication 9, **caractérisé en ce qu'**un catalyseur d'amidification ou de polycondensation est ajouté avec le monomère polyfonctionnel.

11. Composition comprenant comme matrice au moins un copolyamide selon l'une des revendications 1 à 7 et d'autres composants choisis dans le groupe comprenant des charges de renfort, des charges de remplissage, des additifs antioxydants, de stabilisation, des pigments, des colorants, des ignifugeants, des additifs d'aide au moulage.

**Patentansprüche**

1.  Thermoplastisches Copolyamid, **dadurch gekennzeichnet, dass** es resultiert aus der Reaktion zwischen wenigstens einem multifunktionellen Monomer, das der folgenden allgemeinen Formel I:

$$(AR_1)\text{-}R\text{-}(R_2B)_n \qquad (I)$$

entspricht, mit Ausnahme der natürlichen Aminosäuren,
worin:

-   n eine ganze Zahl größer oder gleich 2 ist, vorzugsweise zwischen 2 und 10 liegt (Grenzwerte eingeschlossen)
-   $R_1$, $R_2$ gleich oder verschieden sein können und eine kovalente Bindung, einen aliphatischen, arylaliphatischen, aromatischen oder alkylaromatischen Kohlenwasserstoffrest darstellen
-   R ein linearer oder verzweigter aliphatischer Rest, ein substituierter oder nicht substituierter cycloaliphatischer Rest, ein substituierter oder nicht substituierter aromatischer Rest, der mehrere aromatische Kerne und/oder Heteroatome umfassen kann, eine Polymerkette, die Heteroatome enthalten kann, ist
-   A darstellt die Amin- oder Aminsalzfunktion oder die Säure-, Ester-, Säurehalogenid- oder Amidfunktion
-   B darstellt die Amin- oder Aminsalzfunktion, wenn A eine Säure-, Ester-, Säurehalogenid- oder Amidfunktion darstellt, und eine Säure-, Ester-, Säurehalogenid- oder Amidfunktion, wenn A eine Amin- oder Aminsalzfunktion darstellt, und wenigstens einem der bifunktionellen Monomere der folgenden Formeln II bis IV mit gegebenenfalls monofunktionellen Monomeren der folgenden Formel V oder VI oder mit einem Präpolymer, das ausgehend von wenigstens einem bifunktionellen Monomer der folgenden Formeln II bis IV und gegebenenfalls wenigstens einem monofunktionellen Monomer der folgenden Formeln V oder VI erhalten wird,

-   wobei die bifunktionellen Monomere den folgenden allgemeinen Formeln entsprechen:

$$A_1\text{-}R_3\text{-}A_1 \qquad (II)$$

$$B_1\text{-}R_4\text{-}B_1 \qquad (III)$$

und/oder

$$A_1\text{-}R_5\text{-}B_1 \text{ oder die entsprechenden Lactame} \qquad\qquad (IV)$$

- wobei die monofunktionellen Monomere den folgenden allgemeinen Formeln entsprechen:

$$R_6\text{-}B_1 \qquad\qquad (V)$$

und/oder

$$R_7\text{-}A_1 \qquad\qquad (VI)$$

worin:

- $A_1$, $B_1$ eine Säure-, Ester- oder Säurechloridfunktion beziehungsweise eine Aminfunktion oder ein Aminsalz darstellen,
- $R_3$, $R_4$, $R_5$, $R_6$, $R_7$ lineare oder verzweigte Alkylkohlenwasserstoffreste, substituierte oder nicht substituierte aromatische Alkylaryl-, Arylalkylkohlenwasserstoffreste oder cycloaliphatische Kohlenwasserstoffreste, die ungesättigte Bindungen umfassen können, darstellen,
- das Molverhältnis zwischen den multifunktionellen Monomeren der Formel I und der Summe der difunktionellen Monomere der Formel II, III, IV und monofunktionellen der Formeln V und VI zwischen 0,01 % und 5 %, vorzugsweise zwischen 0,05 und 1 % liegt.

2. Copolyamid gemäß Anspruch 1, **dadurch gekennzeichnet, dass** der Rest R ein aromatischer Rest ist.

3. Copolyamid gemäß einem der Ansprüche 1 bis 2, **dadurch gekennzeichnet, dass** das Monomer der Formel I eine Verbindung ist, worin A die Aminfunktion, B die Säurefunktion darstellt, n gleich 2 ist und R einen aromatischen Rest darstellt, $R_1$ und $R_2$ eine kovalente Bindung darstellen.

4. Copolyamid gemäß einem der Ansprüche 1 bis 3, **dadurch gekennzeichnet, dass** das Monomer der Formel I 5-Amino-isophthalsäure ist.

5. Copolyamid gemäß einem der Ansprüche 1 bis 3, **dadurch gekennzeichnet, dass** das Monomer der Formel I 6-Amino-undecandisäure ist.

6. Copolyamid gemäß einem der vorhergehenden Ansprüche, **dadurch gekennzeichnet, dass** es einen Schmelzindex (MFI) kleiner als 5 g/ 10 min (gemessen bei 275 °C unter einer Last von 2160 g) aufweist.

7. Copolyamid gemäß einem der vorhergehenden Ansprüche, **dadurch gekennzeichnet, dass** es einen Verteilungsindex D der Molekülmassen größer als 2 aufweist.

8. Verfahren zur Herstellung eines Copolyamids gemäß einem der vorhergehenden Ansprüche, **dadurch gekennzeichnet, dass** es darin besteht, zu der Reaktionsmasse, die bifunktionelle Monomere der Formeln 11 bis IV und gegebenenfalls monofunktionelle Monomere der Formeln V oder VI, die zu einem linearen Polyamid führen, enthält, eine festgelegte Menge eines multifunktionellen Monomers der Formel I hinzuzufügen, dann die Polykondensation unter den Temperatur- und Druckbedingungen, die für die Polymerisation besagten linearen Polyamids verwendet werden, durchzuführen.

9. Verfahren zur Herstellung eines Copolyamids gemäß einem der Ansprüche 1 bis 7, **dadurch gekennzeichnet, dass** es darin besteht, ein Präpolymer eines linearen Polyamids ausgehend von Monomer(en) der Formeln II bis IV und gegebenenfalls monofunktionellen Monomeren der Formel V oder VI zu synthetisieren, zu diesem besagten Präpolymer in festem oder geschmolzenem Medium eine festgelegte Menge an polyfunktionellem Monomer hinzuzufügen, dann besagtes polyfunktionelles Monomer und besagtes Präpolymer entweder in fester Phase oder in geschmolzener Phase reagieren zu lassen.

**10.** Verfahren gemäß Anspruch 9, **dadurch gekennzeichnet, dass** ein Amidbildungs- oder Polykondensationskatalysator mit dem polyfunktionellen Monomer hinzugefügt wird.

**11.** Zusammensetzung, die als Matrix wenigstens ein Copolyamid gemäß einem der Ansprüche 1 bis 7 und weitere Bestandteile umfasst, die aus der Gruppe ausgewählt sind, die Füllstoffe zur Verstärkung, Füllstoffe zum Auffüllen, Antioxidationszusätze, Stabilisatoren, Pigmente, Farbstoffe, Flammschutzmittel, Hilfszusätze zum Formen umfasst.

**Claims**

**1.** Thermoplastic copolyamide **characterized in that** it is the result of the reaction between at least one monofunctional monomer satisfying the following general formula I with the exception of natural amino acids:

$$(AR_1)\text{-}R\text{-}(R_2B)_n \qquad (I)$$

in which:

- n is an integer greater than or equal to 2, preferably between 2 and 10 (limits inclusive),
- $R_1$, $R_2$ may be identical or different and represent a covalent bond or an aliphatic, arylaliphatic, aromatic or alkylaromatic hydrocarbon radical,
- R is a linear or branched aliphatic radical, a substituted or unsubstituted cycloaliphatic radical, a substituted or unsubstituted aromatic radical possibly comprising several aromatic rings and/or hetero atoms, or a polymeric chain possibly containing hetero atoms,
- A represents the amine or amine salt functional group, or the acid, ester, acid halide or amide functional group,
- B represents the amine or amine salt functional group when A represents an acid, ester, acid halide or amide functional group, and an acid, ester, acid halide or amide functional group when A represents an amine or amine salt functional group,

and at least one of the difunctional monomers of the following formulae II to IV with, optionally, some of the monofunctional monomers of the following formula V or VI, or with a prepolymer obtained from at least one difunctional monomer of the following formulae II to IV and, optionally, at least one monofunctional monomer of the following formula V or VI,

- the difunctional monomers satisfying the following general formulae:

$$A_1\text{-}R_3\text{-}A_1 \qquad (II)$$

$$B_1\text{-}R_4\text{-}B_1 \qquad (III)$$

and/or

$$A_1\text{-}R_5\text{-}B_1 \text{ or the corresponding lactams} \qquad (IV)$$

- the monofunctional monomers satisfying the following general formulae:

$$R_6\text{-}B_1 \qquad (V)$$

and/or

$$R_7\text{-}A_1 \qquad (VI)$$

in which

- $A_1$, $B_1$ represent, respectively, an acid, ester or acid chloride functional group and an amine functional group or an amine salt,
- $R_3$, $R_4$, $R_5$, $R_6$, $R_7$ represent substituted or unsubstituted, aromatic, linear or branched, alkyl hydrocarbon radicals or alkylaryl, arylalkyl or cycloaliphatic radicals possibly including unsaturated groups,
- the molar ratio of the multifunctional monomers of formula I to the sum of the difunctional monomers of formulae II, III, IV and monofunctional monomers of formulae V and VI is between 0.01 and 5, preferably between 0.05 and 1.

2. Copolyamide according to Claim 1, **characterized in that** the radical R is an aromatic radical.

3. Copolyamide according to either of Claims 1 and 2, **characterized in that** the monomer of formula I is a compound in which A represents the amine functional group, B represents the acid functional group, n is equal to 2, R represents an aromatic radical and $R_1$ and $R_2$ represent a covalent bond.

4. Copolyamide according to one of Claims 1 to 3, **characterized in that** the monomer of formula I is 5-aminoisophthalic acid.

5. Copolyamide according to one of Claims 1 to 3, **characterized in that** the monomer of formula I is 6-aminoundecanedioic acid.

6. Copolyamide according to one of the preceding claims, **characterized in that** it has a melt flow index (MFI) of less than 5 g/10 minutes (measured at 275°C under a load of 2160 g).

7. Copolyamide according to one of the preceding claims, **characterized in that** it has a molecular-mass distribution index D of greater than 2.

8. Process for manufacturing a copolyamide according to one of the preceding claims, **characterized in that** it consists in adding, into the reaction mass containing difunctional monomers of formulae II to IV and, optionally, monofunctional monomers of formula V or VI, leading to a linear polyamide, a predetermined amount of a multifunctional monomer of formula I and then in carrying out the polycondensation under the temperature and pressure conditions used for the polymerization of the said linear polyamide.

9. Process for manufacturing a copolyamide according to one of Claims 1 to 7, **characterized in that** it consists in synthesizing a prepolymer of a linear polyamide from one or more monomers of formulae II to IV and, optionally, monofunctional monomers of formula V or VI, in adding, to this said prepolymer in the solid state or in the melt, a predetermined amount of polyfunctional monomer and then in making the said polyfunctional monomer react with the said prepolymer either in the solid state or in the melt.

10. Process according to Claim 9, **characterized in that** an amidification or polycondensation catalyst is added with the polyfunctional monomer.

11. Composition comprising, as matrix, at least one copolyamide according to one of Claims 1 to 7 and other components chosen from the group comprising reinforcing fillers, filling fillers, antioxidants, stabilizers, pigments, colorants, fire retardants and moulding aids.

FIG 1a

FIG 1b

FIG 2